Europäisches Patentamt

European Patent Office

Office européen des brevets

(19)

(11) **EP 1 454 260 B1**

(12) **EUROPÄISCHE PATENTSCHRIFT**

(45) Veröffentlichungstag und Bekanntmachung des Hinweises auf die Patenterteilung:
**01.06.2005 Patentblatt 2005/22**

(21) Anmeldenummer: 02785220.1

(22) Anmeldetag: **15.10.2002**

(51) Int Cl.⁷: **G06F 17/10**

(86) Internationale Anmeldenummer:
**PCT/EP2002/011530**

(87) Internationale Veröffentlichungsnummer:
**WO 2003/034268 (24.04.2003 Gazette 2003/17)**

(54) **VERFAHREN UND VORRICHTUNG ZUM ABSICHERN EINER EXPONENTIATIONS-BERECHNUNG MITTELS DEM CHINESISCHEN RESTSATZ (CRT)**

METHOD AND DEVICE FOR SECURING AN EXPONENTIATION CALCULATION BY MEANS OF THE CHINESE REMAINDER THEOREM (CRT)

PROCEDE ET DISPOSITIF POUR GARANTIR UN CALCUL D'EXPONENTIATION AU MOYEN DU THEOREME DES RESTES CHINOIS (TRC)

(84) Benannte Vertragsstaaten:
**DE FR**

(30) Priorität: **17.10.2001 DE 10151139**
**19.12.2001 DE 10162584**

(43) Veröffentlichungstag der Anmeldung:
**08.09.2004 Patentblatt 2004/37**

(73) Patentinhaber: **Infineon Technologies AG**
**81669 München (DE)**

(72) Erfinder:
• **FISCHER, Wieland**
**80469 München (DE)**
• **SEIFERT, Jean-Pierre**
**81669 München (DE)**

(74) Vertreter: **Zinkler, Franz, Dipl.-Ing. et al**
**Patentanwälte Schoppe, Zimmermann, Stöckeler & Zinkler,**
**Postfach 246**
**82043 Pullach bei München (DE)**

(56) Entgegenhaltungen:
US-A- 5 991 415

• BONG D ET AL: "OPTIMIZED SOFTWARE IMPLEMENTATIONS OF THE MOLULAR EXPONENTIATION ONGENERAL PURPOSE MICROPROCESSORS" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, Bd. 8, Nr. 7, 1. November 1989 (1989-11-01), Seiten 621-630, XP000072275 ISSN: 0167-4048
• BONEH D ET AL: "ON THE IMPORTANCE OF CHECKING CRYPTOGRAPHIC PROTOCOLS FOR FAULTS" ADVANCES IN CRYPTOLOGY. EUROCRYPT, XX, XX, 11. Mai 1997 (1997-05-11), Seiten 37-51, XP008018071
• SCHINDLER W: "A TIMING ATTACK AGAINST RSA WITH THE CHINESE REMAINDER THEOREM" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN: SPRINGER, DE, Bd. 1965, 17. August 2000 (2000-08-17), Seiten 109-124, XP001049131 ISBN: 3-540-41455-X

- **GROSSSCHADL J: "The Chinese Remainder Theorem and its application in a high-speed RSA crypto chip" COMPUTER SECURITY APPLICATIONS, 2000. ACSAC '00. 16TH ANNUAL CONFERENCE NEW ORLEANS, LA, USA 11-15 DEC. 2000, LOS ALAMITOS, CA, USA,IEEE COMPUT. SOC, US, 11. Dezember 2000 (2000-12-11), Seiten 384-393, XP010529836 ISBN: 0-7695-0859-6**

**Beschreibung**

Die vorliegende Erfindung bezieht sich auf die Kryptographie und insbesondere auf Verfahren und Vorrichtungen zum Absichern einer Exponentiations-Berechnung mittels chinesischem Restsatz (CRT) gegen Fehlerattacken.

Die modulare Exponentiation ist eine der Kernberechnungen für verschiedene kryptographische Algorithmen. Ein Beispiel für einen weit verbreiteten kryptographischen Algorithmus ist das RSA-Kryptosystem, das beispielsweise in "Handbook of Applied Cryptography", Menezes, van Oorschot, Vanstone, CRC Press, 1996, Kapitel 8.2, beschrieben ist. Das RSA-Kryptosystem arbeitet folgendermaßen. Bei der Verschlüsselung verschlüsselt eine Partei B eine Nachricht m für eine andere Partei A. Die Partei A soll die von B erhaltene verschlüsselte Nachricht entschlüsseln. Die Partei B erhält zunächst den öffentlichen Schlüssel von der Partei A. Die Partei B stellt dann die zu verschlüsselnde Nachricht als Ganzzahl m dar. Dann verschlüsselt die Partei B die Nachricht m folgendermaßen:

$$c = m^e \bmod n \qquad (1)$$

In Gleichung (1) stellt m die Klartext-Nachricht dar. e ist der öffentliche Schlüssel. n ist der Modul und ist ebenfalls öffentlich. c stellt die verschlüsselte Nachricht dar.

Die Partei B sendet nun die verschlüsselte Nachricht c zu der Partei A.

Zur Entschlüsselung, also um den Klartext m wieder aus dem Geheimtext c zu erhalten, führt A folgende Berechnung aus:

$$m = c^d \bmod n \qquad (2)$$

In Gleichung (2) stellt d den privaten Schlüssel der Partei A dar, der vor Angriffen zu schützen ist.

In der Technik ist ferner auch ein RSA-Signaturalgorithmus bekannt. Hierbei wird folgendermaßen vorgegangen. Jede Entität A erzeugt zunächst zwei große Primzahlen p und q und berechnet dann den Modul n aus dem Produkt von p und q. Daraus wird dann, wie es ebenfalls im oben bezeichneten Fachbuch im Kapitel 11.3 beschrieben ist, eine Schlüsselerzeugung vorgenommen, so daß jede Partei einen öffentlichen Schlüssel hat, der aus n, also dem Modul, und e besteht, während jede Partei zusätzlich einen privaten Schlüssel d hat.

Zur RSA-Signaturerzeugung und Verifikation signiert die Entität A eine Nachricht m. Jede Entität B soll dann die Signatur von A verifizieren und die Nachricht m aus der Signatur wiedergewinnen.

Bei der Signaturerzeugung berechnet die Entität A zunächst eine Ganzzahl m' = R(m). Danach führt die Entität A folgende Berechnung durch:

$$s = m'^d \bmod n \qquad (3)$$

s ist dabei die Signatur von A für die Nachricht m.

Zur Verifikation der Signatur der Partei A und zum Wiedergewinnen der Nachricht m muß die Partei B folgendermaßen vorgehen:

Zunächst muß die Partei B den öffentlichen Schlüssel (n, e) von A erhalten. Dann führt die Partei B folgende Berechnung durch:

$$m' = s^e \bmod n \qquad (4)$$

In Gleichung (4) ist e der öffentliche Schlüssel von A.

Die Partei B wird dann verifizieren, ob m' das Element aus einem Raum $M_R$ ist. Wenn dies nicht der Fall ist, wird die Signatur zurückgewiesen. Wenn dies der Fall ist, wird die Nachricht m wiedergewonnen, indem m = $R^{-1}$(m') berechnet wird.

Aus der obigen Darstellung wird ersichtlich, daß die modulare Exponentiation an vielerlei Stellen benötigt wird. Insbesondere wird zur RSA-Verschlüsselung in Gleichung (2) und zur RSA-Signaturerzeugung in Gleichung (3) mit dem geheimen Schlüssel d gerechnet.

Nachdem der geheime Schlüssel - genauso wie der öffentliche Schlüssel - bei typischen RSA-Systemen beträchtliche Längen annehmen kann, wie z. B. 1024 oder 2048 Bits, ist die modulare Exponentiation eine relativ aufwendige Berechnung.

Um die modulare Exponentiation schneller berechnen zu können, ist es bekannt, den sogenannten chinesischen Restsatz (CRT; CRT = Chinese Remainder Theorem) einzusetzen, der im Absatz 2.120 des oben bezeichneten Fachbuchs beschrieben ist. Für RSA-Systeme wird insbesondere der Algorithmus von Garner bevorzugt, der ebenfalls in dem oben beschriebenen Fachbuch im Abschnitt 14.5.2 beschrieben ist. Der klassische Algorithmus für den CRT benötigt typischerweise eine modulare Reduktion mit dem Modul M, während dies bei dem Algorithmus nach Garner nicht der Fall ist. Statt dessen wird hier die eine "große" modulare Exponentiation in zwei "kleine" modulare Exponentiationen aufgeteilt, deren Ergebnisse dann gemäß dem chinesischen Restsatz zusammengesetzt werden. Obwohl hier zwei Exponentiationen benötigt werden, ist es dennoch günstiger, zwei "kleine" modulare Exponentiationen zu berechnen, als eine "große" modulare Exponentiation.

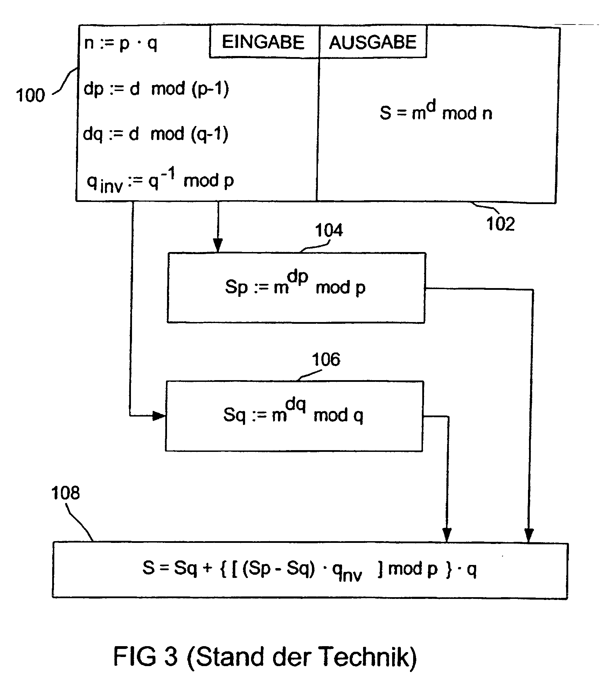

Zur Darstellung des RSA-CRT-Verfahren unter Verwendung des Algorithmus von Garner wird auf Fig. 3 Bezug genommen. In einem Block 100 sind die Eingangsparameter dargelegt, die alle lediglich von p und q sowie vom Schlüssel d abhängen, jedoch nicht von der beispielsweise zu signierenden Nachricht m. In einem Block 102 ist die Ausgabe des Algorithmus dargestellt, wie sie anhand von Gleichung (2) oder Gleichung (3) dargestellt worden ist.

Aus den im Block 100 dargestellten Eingangsgrößen wird dann in einem Block 104 eine erste modulare Hilfs-Exponentiation (sp) berechnet. Analog dazu wird in einem Block 106 dann eine zweite modulare Hilfs-Exponentiation (sq) berechnet. Die Ergebnisse der ersten und der zweiten modularen Hilfs-Exponentiation werden dann in einem Block 108 gemäß dem chinesischen Restsatz zusammengesetzt, um das Ergebnis s = $m^d$ mod n zu erhalten. Generell ist das in Fig. 3 dargestellte RSA-CRT-Verfahren etwa um das Vier-fache schneller als die direkte Berechnung der im Block 102 dargestellten Ausgabe beispielsweise mittels des Square-and-Multiply-Algorithmus.

Aufgrund der Recheneffizienz ist der RSA-CRT-Algorithmus, der in Fig. 3 dargestellt ist, dem Square-and-Multiply-Algorithmus in jedem Fall vorzuziehen. Nachteilig am RSA-CRT-Algorithmus ist jedoch die Tatsache, daß er gegenüber kryptographischen "Angriffen" dahingehend sehr anfällig ist, daß der geheime Schlüssel d ermittelt werden kann, wenn eine fehlerhafte Berechnung des RSA-CRT-Algorithmus entsprechend ausgewertet wird. Diese Tatsache ist in "On the Importance of Eliminating Errors in Cryptographic Computations", Boneh, De-Millo, Lipton, J. Cryptology (2001) 14, S. 101 bis 119, beschrieben. Es wird ausgeführt, daß der geheime Signaturschlüssel, der bei einer Implementation des RSA-Verfahrens, das auf dem chinesischen Restsatz (CRT) basiert, aus einer einzigen fehlerhaften RSA-Signatur ermittelt werden kann.

Eine fehlerhafte RSA-Signatur kann dadurch erhalten werden, daß die Software oder die Hardware, die den Algorithmus ausführt, zu Fehlern gebracht wird, beispielsweise durch Aussetzen des Kryptoprozessors gegenüber einer mechanischen oder thermischen Belastung.

Als Gegenmaßnahmen gegen solche Angriffe, die auf Hardware-Fehlern basieren, wird vorgeschlagen, die Ausgabe jeder Berechnung zu überprüfen, bevor dieselbe aus dem Chip ausgegeben wird. Obwohl dieser zusätzliche Verifikationsschritt das Systemverhalten verschlechtern kann, wird davon gesprochen, daß diese zusätzliche Verifikation aus Sicherheitsgründen wesentlich ist.

Die einfachste Art und Weise der Verifikation besteht darin, eine Gegenrechnung mit dem öffentlichen Exponenten e durchzuführen, wobei folgende Identität festgestellt werden soll:

$$(m^d)^e = m \bmod n \qquad (5)$$

Dieser zusätzliche Verifikationsschritt ist jedoch vom Rechenaufwand her unmittelbar vergleichbar mit dem eigentlichen Signatur- bzw. Entschlüsselungs-Schritt und führt daher zu einer starken Verringerung des Systemverhaltens, liefert jedoch eine hohe Sicherheit.

Nachteilig ist jedoch, daß der öffentliche Schlüssel e in üblichen Protokollen, wie z. B. der ZKA-lib, nicht verfügbar ist. Die ZKA-lib ist eine Sammlung von Spezifikationen des zentralen Kreditausschusses, die regeln, welche Daten verfügbar sind. Für das RSA-CRT-Verfahren sind lediglich die im Block 100 von Fig. 3 gegebenen Eingangsdaten verfügbar. Der öffentliche Schlüssel e ist hierbei nicht Teil der in der ZKA-lib-Beschreibung vorgegebenen Parameter. Der Exponent e müßte daher aufwendig berechnet werden, um die "Gegenrechnung" gemäß Gleichung (5) durchführen zu können. Dies würde die Leistung der Signatur-Chipkarte weiter reduzieren und dürfte dazu führen, daß solche Algorithmen aufgrund ihrer langsamen Arbeitsweise keine Chance auf eine Durchsetzung am Markt haben.

In der Fachveröffentlichung von A. Shamir, "How to check modular Exponentiation", Rump Session, Eurocrypt 97, ist ein weiteres Verfahren beschrieben, um Signaturen zu verifizieren, die durch RSA-CRT-Verfahren erzeugt werden. In dieser Fachveröffentlichung wird vorgeschlagen, eine kleine Zufallszahl r (beispielsweise 32 Bits) zu verwenden und statt der Berechnung im Block 104 folgende Berechnung auszuführen:

$$sp' = m^d \bmod pr \qquad (6)$$

Statt dem Block 106 wird folgende Berechnung ausgeführt:

$$sp' = m^d \bmod qr \qquad (7)$$

Dann, unmittelbar nach den Berechnungen gemäß den Gleichungen (6) und (7) werden folgende Überprüfungsberechnungen durchgeführt:

$$sp' \bmod r = sq' \bmod r \qquad (8)$$

Wenn die Überprüfung gemäß Gleichung (8) wahr ist, wird sp und sq aus folgender Gleichung (9) erhalten:

$$sp' \bmod p = sp \; ; \; sq' \bmod q = sq \qquad (9)$$

Aus den durch Gleichung (9) erhaltenen Werten sp und sq wird dann die im Block 108 in Fig. 3 dargestellte Berechnung durchgeführt, um aus den modularen Hilfs-Exponentiationen das Gesamtergebnis s mittels des chinesischen Restsatzes zusammenzufügen.

Nachteilig an diesem Verfahren ist, daß zur Überprüfung lediglich der Hilfsparameter r sowie die Zwischenergebnisse sp' und sq' herangezogen werden, wobei die Überprüfung nicht zur Unterdrückung eines Ausgabewerts führt, wenn eine kryptographische Attacke stattgefunden hat, die möglicherweise nicht die Zwischenergebnisse sp', sq' oder den Parameter r beeinträchtigt hat, aber dann, beispielsweise in den in Gleichung (9) gegebenen Schritten und der abschließenden Zusammensetzung des Algorithmus zu einem Hardware-Fehler führt, der dazu verwendet werden kann, um den geheimen Schlüssel d unerlaubterweise auszuspähen.

Darüber hinaus wird in der zitierten Fachveröffentlichung von Boneh u. a. beispielsweise als Abwehrmaßnahme zur Sicherung des Fiat-Shamir-Schemas vorgeschlagen, Registerfehler, die auftreten, während der Prozessor auf eine Antwort von außen wartet, dadurch abzuwehren, daß Fehlererfassungsbits zum Schutz des internen Speichers eines Prozessors eingesetzt werden. Weitere Maßnahmen, um RSA-Signaturen zu schützen, bestehen darin, eine Zufälligkeit in das Signaturverfahren einzuführen. Die Zufälligkeit stellt sicher, daß der Unterzeichner niemals die gleiche Nachricht zweimal unterzeichnet. Ferner weiß der Verifizierer, wenn er eine fehlerhafte Signatur vorliegen hat, nicht den vollständigen Klartext, der unterzeichnet worden ist.

Die Aufgabe der vorliegenden Erfindung besteht darin, ein verbessertes Konzept zum Absichern einer Exponentiations-Berechnung mittels chinesischem Restsatz (CRT) gegen Fehlerattacken zu schaffen.

Diese Aufgabe wird durch ein Verfahren gemäß Anspruch 1 oder eine Vorrichtung gemäß Anspruch 11 gelöst.

Der vorliegenden Erfindung liegt die Erkenntnis zugrunde, daß ein Sicherheitsleck dahingehend besteht, wenn das Zusammenfügen zweier Hilfsgrößen, die modulare Exponentiationen mit einem "kleinen" Modul sind, mittels chinesischem Restsatz, um das Ergebnis einer modularen Exponentiation mit einem "großen" Modul zu erhalten, nicht überprüft wird. Wenn lediglich die Berechnung der Hilfsgrößen überprüft wird, jedoch dann, im Zusammenfügungsschritt, keine Überprüfung mehr vorgenommen wird, kann eine Fehlerattacke, die erst nach der Berechnung der Hilfsgrößen zu einer Fehlfunktion des Rechenwerks im Kryptographieprozessor führt, zu einer falschen Ausgabe führen. Insbesondere RSA-Berechnungen mittels dem chinesischen Restsatz sind aus Effizienzgründen erwünscht, da sie einen Rechenzeitgewinn um einen Faktor 4 ermöglichen. Andererseits sind RSA Berechnungen mit CRT besonders anfällig für Sicherheitslecks. Schließlich soll die Überprüfung des Zusammenfügungsschritts nicht besonders aufwendig sein, um nicht den Rechenzeitgewinn durch Verwendung des CRT durch das erneute Berechnen des Zusammenfügungsschritts wieder zunichte gemacht werden. Erfindungsgemäß wird daher nach dem Zusammenfügen der ersten Hilfsgröße und der zweiten Hilfsgröße, um ein Ergebnis der Exponentiations-Berechnung zu erhalten, das Ergebnis der Exponentiations-Berechnung mittels eines Prüfalgorithmus überprüft, der sich von dem Zusammenfügungsalgorithmus unterscheidet, und der auf eine erste Primzahl bzw. eine zweite Primzahl zugreift. Falls die Überprüfung ergibt, daß der Prüfalgorithmus ein anderes als ein vorbestimmtes Ergebnis liefert, wird die Ausgabe des Ergebnisses der Exponentiations-Berechnung unterdrückt. Ansonsten kann davon ausgegangen werden, daß keine Hardware-Attacke stattgefunden hat, so daß das Ergebnis der Exponentiations-Berechnung ausgegeben werden kann.

Ein Vorteil der vorliegenden Erfindung besteht darin, daß das Sicherheitsleck, das bisher beim Zusammenfügen mittels chinesischem Restsatz bestand, "gestopft" wird.

Ein weiterer Vorteil der vorliegenden Erfindung besteht darin, daß zur Überprüfung keine erneute Zusammenfügungsberechnung stattfinden muß, sondern daß mit einfachen Mitteln unter Verwendung der ersten bzw. der zweiten Primzahl eine Überprüfung der Exponentiations-Berechnung durchgeführt werden kann.

Ein weiterer Vorteil der vorliegenden Erfindung besteht darin, daß nunmehr nicht irgendwo in der Mitte des RSA-CRT-Algorithmus, sondern unmittelbar vor der Ausgabe des für einen Angreifer relevanten Ergebnisses eine Sicherheitsüberprüfung durchgeführt wird.

Ein weiterer Vorteil der vorliegenden Erfindung besteht darin, daß die Überprüfung des Zusammenfügungsschritts gemäß der vorliegenden Erfindung ohne weiteres mit weiteren Überprüfungsmaßnahmen, beispielsweise zur Überprüfung der Ergebnisse der Hilfs-Exponentiationen oder aber zur Abwehr von Hardware-Attacken durch Überprüfung der Eingangsdaten nach der kryptographischen Berechnung kombiniert werden können, um einen nach allen Seiten abgesicherten RSA-CRT-Algorithmus zu erhalten, bei dem der Mehraufwand zur Absicherung des Algorithmus gegenüber Hardware-Attacken im Vergleich zum Gewinn durch Verwendung des RSA-CRT-Verfahrens klein ist.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Blockschaltbild des erfindungsgemäßen Konzepts;

Fig. 2    ein bevorzugtes Ausführungsbeispiel für ein sicheres RSA-CRT-Verfahren, bei dem neben der Überprüfung des Zusammenfügungsschritts auch eine Überprüfung einer Veränderung von Eingangsdaten und eine Überprüfung von Zwischenergebnissen vorgenommen wird; und

Fig. 3 ein Blockschaltbild des RSA-CRT-Verfahrens unter Verwendung des Algorithmus von Garner.

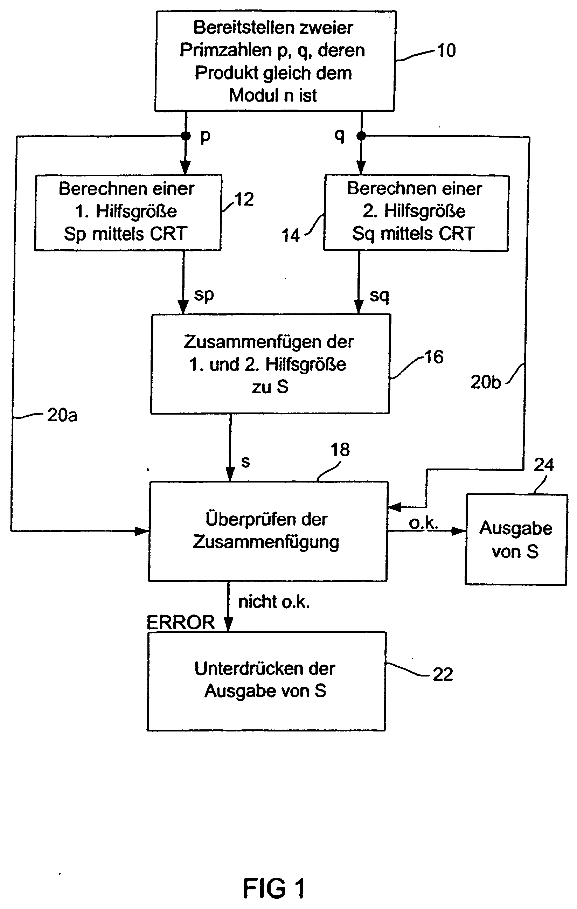

Fig. 1 zeigt ein Blockdiagramm des erfindungsgemäßen Konzepts zum Absichern einer Exponentiations-Berechnung mittels chinesischem Restsatz. Zunächst werden zwei Primzahlen p, q bereitgestellt, deren Produkt gleich dem Modul n ist (Block 10). Hierauf wird unter Verwendung der ersten Primzahl p und unter Verwendung des chinesischen Restsatzes eine erste Hilfsgröße sp berechnet (Block 12). Analog wird unter Verwendung der zweiten Primzahl q ebenfalls mittels des CRT eine zweite Hilfsgröße sq berechnet. Die erste und die zweite Hilfsgröße sp, sq werden nunmehr zusammengefügt (Block 16), um aus den beiden Hilfs-Exponentiationen sp und sq mit jeweils "kleinem" Modul p bzw. q eine Exponentiation mit "großem" Modul n zu erhalten. Der beste Gewinn wird dann erreicht, wenn die beiden Primzahlen p, q etwa die gleiche Länge haben, also jeweils halb so groß sind wie der "große" Modul n.

Erfindungsgemäß wird nunmehr in einem Block 18 die Zusammenfügung der ersten und der zweiten Hilfsgröße mittels eines Überprüfungsalgorithmus überprüft, der sich von dem Zusammenfügungsalgorithmus, der im Block 16 ausgeführt wird, unterscheidet, und der das Ergebnis s der Zusammenfügung und die erste Primzahl und/oder die zweite Primzahl verwendet, wie as durch Primzahl-Eingangsleitungen 20a, 20b symbolisch dargestellt ist. Ergibt die Überprüfung im Block 18, daß der in Block 18 verwendete Prüfalgorithmus ein anderes als ein vorbestimmtes Ergebnis liefert, wird zu einem Block 22 gesprungen, der eine Ausgabe des Ergebnisses des Zusammenfügungsschritts 16 unterdrückt. Ergibt der Überprüfungsalgorithmus im Block 18 dagegen, daß sich das vorbestimmte Resultat ergibt, so kann zu einem Block 24 gesprungen werden, um eine Ausgabe des Ergebnisses des Zusammenfügungsschritts 16 zu veranlassen. Diese Ausgabe kann beispielsweise eine digitale Signatur oder ein entschlüsselter Klartext sein.

Bei einem bevorzugten Ausführungsbeispiel der vorliegenden Erfindung lautet der Überprüfungsalgorithmus folgendermaßen:

$$s \bmod p = sp \qquad (10)$$

und/oder

$$s \bmod q = sq \qquad (11)$$

Dieser Überprüfungsalgorithmus kann unmittelbar auf den Zusammenfügungsschritt im Block 108 von Fig. 3 angewendet werden. Hierzu wird folgendermaßen vorgegangen. Zunächst wird das Zwischenergebnis s, das der Block 108 liefert, und das beispielsweise in einem Ausgangsregister des Kryptoprozessors vorliegt, verwendet. Darüber hinaus wird an eine Eingangsdaten-Speicherstelle zugegriffen, an der die erste Primzahl p abgespeichert ist. Hierauf wird s mod p berechnet und das erhaltene Ergebnis zwischengespeichert. Dann wird auf eine Zwischenergebnis-Speicherstelle zugegriffen, an der das Ergebnis des Blocks 104, als sp, gespeichert ist. Das Ergebnis der Berechnung s mod p wird mit dem gespeicherten sp verglichen. Stellt sich heraus, daß die Gleichheitsbedingung erfüllt ist, so hat der erste Teil des Überprüfungsalgorithmus zu keinem Fehler geführt. Die analoge Vorgehensweise kann mit der zweiten Primzahl q durchgeführt werden, um s mod q zu berechnen, und um dieses Ergebnis dann mit sq zu vergleichen. Ergibt sich auch hier die Gleichheitsbedingung, so kann davon ausgegangen werden, daß der Zusammenfügungsschritt korrekt stattgefunden hat, und daß auch an der Eingangsdaten-Speicherstelle, wo p und q gespeichert sind, als auch an der Zwischenergebnisspeicherstelle, wo sp und sq gespeichert sind, keine Veränderung aufgetreten ist, die auf eine Hardware-Attacke hindeuten würde. Ergibt dagegen zumindest ein Teil des Überprüfungsalgorithmus einen Fehler, so wird die Ausgabe unterdrückt, da bei der Zusammenfügung selbst und/oder an den Speicherplätzen für sp, sq, p, q, Veränderungen aufgetreten sind.

Im nachfolgenden wird der erste Teil des Überprüfungsalgorithmus s mod p = sp näher erläutert. Aus der im Block 108 dargestellten Gleichung wird ersichtlich, daß dieselbe nach einer modularen Reduktion mit der ersten Primzahl p zu s = sq + (sp - sq) "entartet", so daß sich die Terme +sq und -sq gegenseitig aufheben, und daß sp verbleibt.

Wird dagegen mit dem zweiten Teil des Überprüfungsalgorithmus mit s mod q = sq gearbeitet, so ergibt sich bei näherer Betrachtung der im Block 108 befindlichen Gleichung, daß diese den Wert sq + einem ganzzahligen Faktor multipliziert mit q ist, wobei die modulare Reduktion mittels des Moduls q von q mal einer konstanten Zahl den Wert 0 ergibt, so daß aus der im Block 108 befindlichen Gleichung noch sq verbleibt.

Aus näherer Analyse der im Block 108 befindlichen Gleichung für s können unter Verwendung der obigen Ausführungen weitere Überprüfungsalgorithmen abgeleitet werden, um das Ergebnis der Zusammenfügung auf irgendeine Art und Weise zu verarbeiten, um ein vorbestimmtes Resultat zu erhalten, wenn kein Fehler aufgetreten ist, bzw. um ein von dem vorbestimmten Resultat abweichendes Resultat zu erhalten, wenn ein Fehler beim Zusammenfügen aufgetreten ist.

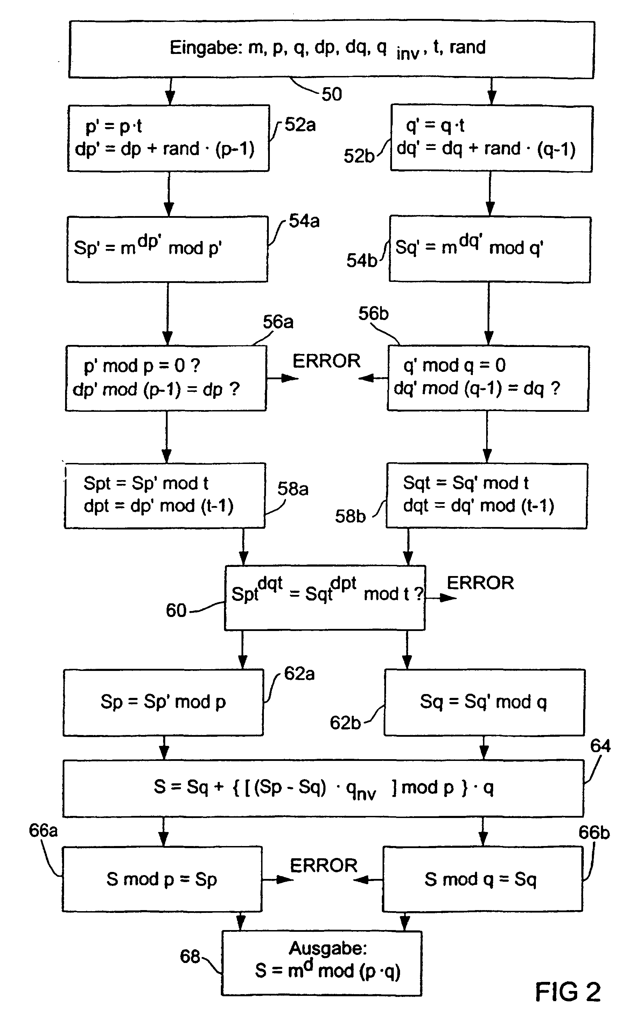

Im nachfolgenden wird anhand von Fig. 2 ein bevorzugtes Ausführungsbeispiel der vorliegenden Erfindung dargestellt, bei dem der Zusammenfügungsschritt als Block 64 gekennzeichnet ist, während der erste Teil des Überprüfungsalgorithmus im Block 66a dargestellt ist, und der zweite Teil des Überprüfungsalgorithmus im Block 66b dargestellt ist. Das in Fig. 2 gezeigte gesamte RSA-CRT-Verfahren verwendet ferner zur weiteren Absicherung gegenüber Fehlerattacken eine Fehlerüberprüfung anhand der Eingangsdaten als auch anhand der ersten und der zweiten Hilfsgröße, um die korrekte Berechnung dieser Größen nachzukontrollieren.

Ferner wird zusätzlich bei dem in Fig. 2 gezeigten bevorzugten Ausfuhrungsbeispiel zum sicheren Ausführen des RSA-CRT-Verfahrens eine Überprüfung der Eingangsdaten vor der Ausgabe von Ausgangsdaten eines kryptographischen Algorithmus an mehreren Stellen innerhalb des Algorithmus verwendet.

Des weiteren wird bei dem in Fig. 2 gezeigten Ausführungsbeispiel auch die Berechnung des kryptographischen Algorithmus selbst, und zwar insbesondere die Berechnung der beiden Hilfs-Exponentiationen überprüft.

Zunächst werden, wie es bereits anhand von Fig. 3 dargestellt worden ist, die Parameter p, q, dp, dq, qinv bereitgestellt, die die üblichen Eingabeparameter für das RSA-CRT-Verfahren sind. Ferner werden, wie es in einem Block 50 von Fig. 2 dargestellt ist, die zu verschlüsselnde Nachricht m sowie eine Zahl t und eine Zufallszahl rand als Eingangsdaten bereitgestellt. Vorzugsweise ist die Zahl t eine Primzahl, und vorzugsweise eine kleine Primzahl, welche beispielsweise nicht länger als 16 Bits ist, um den Vorteil des CRT-Verfahrens nicht zu stark zu schmälern, nämlich daß die beiden Hilfs-Exponentiationen mit kleinerem Modul im Vergleich zu einer einzigen modularen Exponentiation mit dem Modul n = p mal q stattfinden. Ist die Zahl t keine Primzahl, so ist dieser Fall ebenfalls möglich, in den Gleichungen müßte jedoch dann der Ausdruch (t-1) durch die Eulersche Phi-Funktion von t ersetzt werden.

Zunächst werden Eingangsdaten in Blöcken 52a, 52b verarbeitet. Als Verarbeitungsalgorithmus wird die Multiplikation des ursprünglichen Parameters p bzw. q mit der Primzahl t verwendet. Ferner wird als Verarbeitungsvorschrift die Addition von dp mit dem Produkt aus der Zufallszahl rand und der Zahl (p-1) bzw. entsprechend für q verwendet.

Es sei darauf hingewiesen, daß prinzipiell auch eine einzige der vier in den Blöcken 52a, 52b gegebenen Verarbeitungsvorschriften einen erfindungsgemäßen Effekt ergeben würde. Nach der Vollendung der Blöcke 52a, 52b werden die durch die Verarbeitung erhaltenen Sicherheitsinformationen p', dp', q' und dq' an einer Sicherheitsinformationen-Speicherstelle gespeichert. Diese Speicherstelle könnte beispielsweise der Arbeitsspeicher eines Kryptoprozessors sein, oder ein inneres Register, das dem Rechenwerk des Kryptoprozessors zugeordnet ist. Dann wird durch das Rechenwerk, wie es durch Blöcke 54a, 54b dargestellt ist, als Berechnung innerhalb des kryptographischen Algorithmus sowohl die erste Hilfs-Exponentiation (sp') als auch die zweite Hilfs-Exponentiation (sq') durchgeführt, wie es in Fig. 2 gezeigt ist. Nach dem Durchführen der Blöcke 54a, 54b werden die Ausgangsdaten der Berechnungen, nämlich sp' und sq' nicht unmittelbar entweder ausgegeben bzw. für eine weitere Berechnung weitergegeben, sondern es wird erfindungsgemäß zunächst in Blöcken 56a, 56b mittels eines Kontrollalgorithmus überprüft, ob die Eingangsdaten für die Berechnung in den Blöcken 54a, 54b während der Berechnung durch die Blöcke 54a, 54b verändert worden sind. Hierzu wird als Kontrollalgorithmus eine modulare Reduktion verwendet, wobei als vorbestimmtes Ergebnis entweder 0 erwartet wird, wie es in den ersten Zeilen der beiden Blöcke 56a, 56b dargestellt ist, oder entweder dp oder dq als vorbestimmtes Resultat erwartet wird. Das vorbestimmte Resultat ergibt sich, wenn die Größe p', die in der Terminologie der vorliegenden Erfindung die Sicherheitsinformation ist, nicht beispielsweise durch eine Fehlerattacke verändert worden ist. Dasselbe gilt für die weitere Sicherheitsinformation dp'.

Sind die Überprüfungen in den Blöcken 56a, 56b erfolgreich, also werden vorbestimmte Ergebnisse durch den Kontrollalgorithmus erhalten, so wird zu Blöcken 58a, 58b weitergegangen. Die Blöcke 58a, 58b zeigen bevorzugte Vorberechnungen, um neben dem Eingangsdaten-Überprüfungskonzept auch ein Ergebnisdaten-Überprüfungskonzept durchzuführen. Mittels eines Ergebnis-Kontrollalgorithmus (Block 60 in Fig. 2) wird dann überprüft, ob die Berechnung der Hilfs-Exponentiationen in den Blöcken 54a, 54b korrekt stattgefunden hat.

In Blöcken 62a, 62b werden die Hilfs-Exponentiationen der Blöcke 54a, 54b entsprechend modular reduziert, um den Einfluß des Parameters t bzw. der Zufallszahl zu eliminieren. In einem Block 64 wird schließlich, wie es anhand des Blocks 108 von Fig. 3 klargestellt worden ist, der Zusammensetzungsschritt ausgeführt, um aus den Hilfs-Exponentiationsergebnisse sp, sq die signierte Nachricht s zu erzeugen.

Bei einem bevorzugten Ausführungsbeispiel der vorliegenden Erfindung wird dieses Ergebnis jedoch nicht unmittelbar verwendet, sondern es wird nach dem Zusammensetzen durch den Block 64 eine Überprüfung dahingehend durchgeführt, ob das Zusammensetzen erfolgreich war.

Dies wird dadurch erreicht, daß zunächst die erhaltene signierte Nachricht s unter Verwendung der Primzahl p als Modul modular reduziert wird. Dieser Kontrollalgorithmus sollte als Ergebnis sp ergeben, wobei dieses sp gleich dem im Block 62a ausgerechneten Wert sp sein muß.

Analog wird in einem Block 66b vorgegangen, um die Korrektheit des Ergebnisses s auch anhand einer modularen Reduktion mit der Primzahl q als Modul zu überprüfen. Hierzu wird zur Ausführung der in Block 66a gegebenen Berechnung zunächst auf die Zwischenspeicherstelle zugegriffen, an der das Ergebnis des Blocks 64 abgespeichert wurde. Zusätzlich wird auf die Speicherstelle zugegriffen, an der das Eingangsdatum p gespeichert ist. Schließlich wird, um den Vergleich des Blocks 66a durchzuführen, auf die Speicherstelle zugegriffen, in der das Ergebnis des Blocks 62a, also sp, gespeichert ist. Analog wird im Block 66b für s, q und sq vorgegangen.

Liefert die Berechnung im Block 66a ein vorbestimmtes Resultat dahingehend, daß die linke und die rechte Seite der im Block 66a gegebenen Gleichung nicht gleich sind, so wird ein Fehler ausgegeben, und die Ausgabe des Ergebnisses s des Blocks 64 wird unterdrückt. Dieselbe Unterdrückung des Ergebnisses s findet statt, wenn die Berechnung im Block 66b ergibt, daß ein Fehler stattgefunden hat. Eine Unterdrückung findet somit vorzugsweise bereits dann statt, wenn ein einziger Block einen Fehler ergeben hat bzw., in anderen Worten ausgedrückt, findet eine Ergebnisausgabe mittels eines Blocks 68 nur dann statt, wenn sowohl die Berechnung im Block 66a als auch die Berechnung im Block 66b korrekt waren.

Anhand des Beispiels in Block 66a wird deutlich, daß dieser Ergebnis-Kontrollalgorithmus dahingehend vorteilhaft ist, daß er unmittelbar das Ergebnis des Blocks 64 zur Überprüfung verwendet, daß er jedoch auch auf den Eingangsdaten-Speicherbereich zugreift, um die Primzahl p zu erhalten bzw. den Inhalt der Speicherstelle, an der p stehen sollte, und daß zusätzlich auch ein Zwischenergebnis verwendet wird, nämlich sp, das im Schritt 62a erhalten worden ist. Mittels einer Berechnung wird somit sowohl überprüft, ob sich Eingangsdaten verändert haben, als auch wird überprüft, ob der Zusammensetzungsschritt 64 des RSA-CRT-Verfahrens von dem Krypto-Rechenwerk korrekt durchgeführt worden ist. Schließlich wird auch ein Zwischenergebnis sp verwendet, so daß in eine einzige einfache Berechnung auch Zwischenergebnis-Register mit einbezogen werden.

Aus dem in Fig. 2 gezeigten Ausführungsbeispiel wird deutlich, daß sowohl der Verarbeitungsalgorithmus, um die Sicherheitsinformationen zu erzeugen, als auch der Kontrollalgorithmus zum Überprüfen der Eingangsdaten einfache Algorithmen sind, die ohnehin in einem Krypto-Rechenwerk vorhanden sind, wie z. B. ein Multiplikationsalgorithmus oder ein Algorithmus zur Durchführung einer modularen Reduktion. Dasselbe trifft zu für die Verarbeitungsalgorithmen in den Blöcken 62a, 62b, die ebenfalls auf einer modularen Reduktion basieren, und auch für den Kontrollalgorithmus in den Blöcken 66a, 66b, der wiederum auf einer modularen Reduktion basiert.

Obgleich in dem vorhergehenden in Fig. 2 gezeigten Ausführungsbeispiel als Verarbeitungsalgorithmus die Multiplikation einer Zahl mit einer Konstanten, und als - dazu korrespondierender - Kontrollalgorithmus die modulare Reduktion des Multiplikationsergebnisses mit der ursprünglichen Zahl dargestellt worden sind, ist es für Fachleute offensichtlich, daß eine Vielzahl von miteinander korrespondierenden Verarbeitungsalgorithmen und Kontrollalgorithmen existiert, die es ermöglichen, zu überprüfen, ob Eingangsdaten während der Durchführung einer Berechnung in einem kryptographischen Algorithmus z. B. durch Fehlerattacken verändert worden sind.

Aus Fig. 2 wird ferner deutlich, daß die Verarbeitungsalgorithmen genauso wie die Kontrollalgorithmen sehr einfach gestaltet werden können, und keine zusätzlichen Parameter benötigen, als die ohnehin vorhandenen Parameter. Insbesondere wird es erfindungsgemäß bevorzugt, nicht zusätzliche Parameter, wie z. B. den öffentlichen Schlüssel e, zunächst aufwendig zu berechnen und dann für eine "Gegenrechnung" zu verwenden, sondern möglichst viele Eingangsdaten, Zwischenergebnisdaten etc. miteinander zu verknüpfen, da damit mittels eines einzigen Überprüfungsschritts mögliche Fehler im Arbeitsspeicher, in den inneren Registern oder in dem Rechenwerk selbst detektiert werden können, um im Falle eines Fehlers eine Datenausgabe zu unterdrücken, damit keine geheimen Informationen aus einer falschen Ausgabe ermittelbar sind.

Bezugszeichenliste

| 10 | Bereitstellen zweier Primzahlen |
| 12 | Berechnen einer ersten Hilfsgröße sp |
| 14 | Berechnen einer zweiten Hilfsgröße sq |
| 16 | Zusammenfügen der ersten und der zweiten Hilfsgröße zu s |
| 18 | Überprüfen der Zusammenfügung |
| 20a | Leitung für erste Primzahl |
| 20b | Leitung für zweite Primzahl |
| 22 | Unterdrücken der Ausgabe von s |
| 24 | Ausgabe von s |
| 50 | Eingangsdaten für RSA-CRT-Algorithmus |
| 52a, 52b | Verarbeiten der Eingangsdaten um Sicherheitsinformationen zu erhalten |
| 54a, 54b | Rechnung des kryptographischen Algorithmus |
| 56a, 56b | Verarbeiten der Sicherheitsinformationen mittels Kontrollalgorithmus und Überprüfen, ob vorbestimmtes Resultat erreicht ist |
| 58a, 58b | Ergebnis-Kontrollalgorithmus |
| 60 | Überprüfen mittels Ergebnis-Kontrollalgorithmus |
| 62, 62b | Reduzieren von sp' bzw. sq' |
| 64 | Zusammenfügungsalgorithmus |
| 66a, 66b | erster Teil und zweiter Teil des Prüfalgorithmus |
| 68 | Ausgabe der digitalen Signatur s |
| 100 | Eingangsdaten in das RSA-CRT-Verfahren |
| 102 | Ausgangsdaten des RSA-CRT-Verfahrens |
| 104 | Berechnen einer ersten Hilfs-Exponentiation |
| 106 | Berechnen einer zweiten Hilfs-Exponentiation |

108 Zusammenfügen der ersten und der zweiten Hilfs-Exponentiation

**Patentansprüche**

1. Rechnergestütztes Verfahren zum Absichern einer Exponentiations-Berechnung mittels chinesischem Restsatz (CRT) unter Verwendung zweier Primzahlen (p, q), die Hilfs-Module für eine Berechnung von Hilfsgrößen bilden, die zusammensetzbar sind, um eine modulare Exponentiation für einen Modul zu berechnen, der gleich dem Produkt der Hilfsgrößen ist, wobei die Exponentiationsberechnung innerhalb eines kryptographischen Algorithmus für eine Verschlüsselung einer Nachricht, eine Entschlüsselung einer Nachricht, eine Signaturerzeugung aus einer Nachricht oder eine Signatur-Verifikationsberechnung aus einer Nachricht ausgeführt wird, mit folgenden Schritten:

Berechnen (12) der ersten Hilfsgröße (sp) unter Verwendung der ersten Primzahl (p) als Modul und unter Verwendung der Nachricht;

Berechnen (14) der zweiten Hilfsgröße (sq) unter Verwendung der zweiten Primzahl (q) als Modul und unter Verwendung der Nachricht;

Zusammenfügen (16) der ersten Hilfsgröße (sp) und der zweiten Hilfsgröße (sq) unter Verwendung eines Zusammenfügungsalgorithmus, um ein Ergebnis der Exponentiations-Berechnung zu erhalten;

nach dem Schritt des Zusammenfügens, Überprüfen (18) des Ergebnisses der Exponentiations-Berechnung mittels eines Prüfalgorithmus (66a, 66b), der sich von dem Zusammenfügungsalgorithmus unterscheidet, unter Verwendung der ersten Primzahl (p) und/oder der zweiten Primzahl (q), wobei der Prüfalgorithmus ein vorbestimmtes Resultat liefert, wenn der Schritt des Zusammenfügens (16) korrekt abgelaufen ist; und

falls der Schritt des Überprüfens (18) ergibt, daß der Prüfalgorithmus ein anderes als das vorbestimmte Resultat liefert, Unterdrücken (22) einer Ausgabe des Ergebnisses der Exponentiations-Berechnung.

2. Verfahren nach Anspruch 1, bei dem der Prüfalgorithmus als Eingangsdaten neben dem Ergebnis (s) der Exponentiations-Berechnung einen Inhalt einer Speicherstelle verwendet, an der die erste Hilfsgröße (sp), die zweite Hilfsgröße (sq), die erste Primzahl (p) oder die zweite Primzahl (q) gespeichert sind.

3. Verfahren nach Anspruch 1 oder 2, bei dem die Exponentiations-Berechnung eine RSA-Verschlüsselung, eine RSA-Entschlüsselung, eine RSA-Signaturberechnung oder eine RSA-Signatur-Verfikationsberechnung ist.

4. Verfahren nach einem der vorhergehenden Ansprüche, bei dem der Zusammenfüguizgsalgorithmus der Algorithmus nach Garner ist.

5. Verfahren nach einem der vorhergehenden Ansprüche, bei dem der Prüfalgorithmus eine modulare Reduktion des Ergebnisses der Exponentiations-Berechnung mit der ersten Primzahl (p) und/oder der zweiten Primzahl (q) als Modul umfaßt.

6. Verfahren nach einem der vorhergehenden Ansprüche, bei dem die erste Hilfsgröße folgendermaßen berechnet wird:

$$sp := m^{dp} \bmod p;$$

bei dem die zweite Hilfsgröße folgendermaßen berechnet wird:

$$sq = m^{dq} \bmod q;$$

bei dem der Zusammenfügungsalgorithmus folgendermaßen definiert ist:

$$s = sq + \{[(sp-sq) \cdot qinv] \bmod p\} \cdot q \ ;$$

und
bei dem der Überprüfungsalgorithmus folgendermaßen definiert ist:

$$s \bmod p = sp;$$

und/oder

$$s \bmod q = sq;$$

und
bei dem das vorbestimmte Resultat eine Gleichheitsbedingung in dem Überprüfungsalgorithmus ist.

7. Verfahren nach einem der Ansprüche 1 bis 5, das ferner folgenden Schritt aufweist:

nach dem Schritt des Zusammenfügens der ersten Hilfsgröße und der zweiten Hilfsgröße, Überprüfen, ob Eingangsdaten für die Exponentiations-Berechnung verändert wurden, und, wenn dies der Fall ist, Unterdrücken des Ergebnisses der Exponentiations-Berechnung.

8. Verfahren nach Anspruch 7, bei dem zur Überprüfung von Hilfs-Exponenten (dp, dq) eine Zufallszahl (rand) verwendet wird.

9. Verfahren nach Anspruch 7 oder 8, bei dem zur Überprüfung der ersten Primzahl (p) und der zweiten Primzahl (q) als Eingangsdaten eine Primzahl (t) verwendet wird.

10. Verfahren nach Anspruch 9, bei der die Primzahl (t) eine Stellenzahl hat, die kleiner als eine Stellenzahl der ersten Primzahl (p) und der zweiten Primzahl (q) ist.

11. Rechnergestützte Vorrichtung zum Absichern einer Exponentiations-Berechnung mittels chinesischem Restsatz (CRT) unter Verwendung zweier Primzahlen (p, q), die Hilfs-Module für eine Berechnung von Hilfsgrößen bilden, die zusammensetzbar sind, um eine modulare Exponentiation für einen Modul zu berechnen, der gleich dem Produkt der Hilfsgrößen ist, wobei die Exponentiationsberechnung innerhalb eines kryptographischen Algorithmus für eine Verschlüsselung einer Nachricht, eine Entschlüsselung einer Nachricht, eine Signaturerzeugung aus einer Nachricht oder eine Signatur-Verifikationsberechnung aus einer Nachricht ausgeführt wird, wobei besagte Vorrichtung die folgenden Merkmale enthält:

eine Einrichtung zum Berechnen (12) der ersten Hilfsgröße (sp) unter Verwendung der ersten Primzahl (p) als Modul und unter Verwendung der Nachricht;

eine Einrichtung zum Berechnen (14) der zweiten Hilfsgröße (sq) unter Verwendung der zweiten Primzahl (q) als Modul und unter Verwendung der Nachricht;

eine Einrichtung zum Zusammenfügen (16) der ersten Hilfsgröße (sp) und der zweiten Hilfsgröße (sq) unter Verwendung eines Zusammenfügungsalgorithmus, um ein Ergebnis der Exponentiations-Berechnung zu erhalten;

wobei besagte Einrichtung zum Zusammenfügen der ersten Hilfsgröße (sp) und der zweiten Hilfsgröße (sq) weiter Mittel zum Liefern eines Ergebnisses der Exponentiations-Berechnung enthält;
eine Einrichtung zum Überprüfen (18) des Ergebnisses der Exponentiations-Berechnung mittels eines Prüfalgorithmus (66a, 66b), der sich von dem Zusammenfügungsalgorithmus unterscheidet, unter Verwendung der ersten Primzahl (p) und/oder der zweiten Primzahl (q), wobei besagte Einrichtung zum Überprüfen des Ergebnisses der Exponentiations-Berechnung weiter Mittel zum Liefern eines vorbestimmtes Resultats unter Verwendung des besagtes Prüfalgorithmus enthält, wenn besagte die Einrichtung zum Zusammenfügen (16) ein korrektes Ergebnis geliefert hat; und
eine Einrichtung zum Unterdrücken (22) einer Ausgabe des Ergebnisses der Exponentiations-Berechnung, falls die Einrichtung zum Überprüfen (18) anzeigt, daß der Prüfalgorithmus ein anderes als das vorbestimmte Resultat liefert.

## Revendications

1. Procédé assisté par ordinateur pour protéger un calcul par élévation à une puissance à l'aide du reste chinois (TRC) en utilisant deux nombres premiers (p, q) qui forment des modules auxiliaires pour calculer des grandeurs auxiliaires qui peuvent être combinées afin de calculer une élévation modulaire à une puissance pour un module égal au produit des grandeurs auxiliaires,
le calcul par élévation à une puissance étant effectué au sein d'un algorithme de chiffrement destiné à chiffrer un message, à déchiffrer un message, à élaborer une signature à partir d'un message ou à effectuer sur un message un calcul qui vérifie la signature, les étapes du procédé étant les suivantes :

- calculer (12) la première grandeur auxiliaire (sp) en utilisant comme module le premier nombre premier (p) et en utilisant le message,
- calculer (14) la deuxième grandeur auxiliaire (sq) en utilisant comme module le deuxième nombre premier (q) et en utilisant le message,
- fusionner (16) la première grandeur auxiliaire (sp) et la deuxième grandeur auxiliaire (sq) en utilisant un algorithme de fusion pour obtenir un résultat calcul par élévation à une puissance,
- après l'étape de fusion, vérifier (18) le résultat du calcul par élévation à une puissance à l'aide d'un algorithme de vérification (66a, 66b), différent de l'algorithme de fusion, en utilisant le premier nombre premier (p) et/ou le deuxième nombre premier (q), l'algorithme de vérification donnant un résultat escompté lorsque l'étape de fusion (16) s'est déroulée correctement et
- si l'étape de vérification (18) montre que l'algorithme de vérification donne un autre résultat que celui escompté, on empêche (22) le résultat du calcul par élévation à une puissance de sortir.

**2.** Procédé selon la revendication 1, d'après lequel l'algorithme de vérification en tant que données d'entrée utilise, outre le résultat (s) du calcul par élévation à une puissance, un contenu d'un emplacement de mémoire dans lequel sont enregistrés la première grandeur auxiliaire (sp), la deuxième grandeur auxiliaire (sq), le premier nombre premier (p) ou le deuxième nombre premier (q).

**3.** Procédé selon la revendication 1 ou 2, d'après lequel le calcul par élévation à une puissance est un chiffrement RSA, un déchiffrement RSA, un calcul de signature RSA ou un calcul de vérification pour la signature RSA.

**4.** Procédé selon l'une des revendications précédentes, d'après lequel l'algorithme de fusion est l'algorithme de Garner.

**5.** Procédé selon l'une des revendications précédentes, d'après lequel l'algorithme de vérification comprend une réduction modulaire effectuée sur le résultat du calcul par élévation à une puissance, à l'aide du premier nombre premier (p) et/ou du deuxième nombre premier (q) comme module.

**6.** Procédé selon l'une des revendications précédentes, d'après lequel la première grandeur auxiliaire est calculée de la manière suivante :

$$sp = m^{dp} \bmod p,$$

la deuxième grandeur auxiliaire est calculée de la manière suivante :

$$sq = m^{dq} \bmod q,$$

l'algorithme de fusion est défini de la manière suivante :

$$s = sq + \{[(sp - sq) \cdot qinv] \bmod p\} \cdot q$$

et l'algorithme de vérification est défini de la manière suivante :

$$s \bmod p = sp$$

et/ou

$$s \bmod q = sq$$

et le résultat escompté est une condition d'égalité dans l'algorithme de vérification.

**7.** Procédé selon l'une des revendications 1 à 5, qui comprend en outre l'étape suivante :

- après l'étape à laquelle la première grandeur auxiliaire et la deuxième grandeur auxiliaire ont été fusionnées, vérifier si les données d'entrée pour calculer l'élévation à une puissance ont été modifiées et, si c'est le cas, empêcher le résultat du calcul par élévation à une puissance de sortir.

**8.** Procédé selon la revendication 7, d'après lequel on utilise un nombre aléatoire (rand) pour vérifier les exposants auxiliaires (dp, dq).

**9.** Procédé selon la revendication 7 ou 8, d'après lequel on utilise un nombre premier (t) comme donnée d'entrée pour vérifier le premier nombre premier (p) et le deuxième nombre premier (q).

**10.** Procédé selon la revendication 9, d'après lequel le nombre premier (t) a un nombre de chiffres inférieur au nombre de chiffres du premier nombre premier (p) et du deuxième nombre premier (q).

**11.** Dispositif assisté par ordinateur pour protéger un calcul par élévation à une puissance à l'aide du reste chinois (TRC) en utilisant deux nombres premiers (p, q) qui forment des modules auxiliaires pour calculer des grandeurs auxiliaires qui peuvent être combinées afin de calculer une élévation modulaire à une puissance pour un module égal au produit des grandeurs auxiliaires, le calcul par élévation à une puissance étant effectué au sein d'un algorithme de chiffrement destiné à chiffrer un message, à déchiffrer un message, à élaborer une signature à partir d'un message ou à effectuer sur un message un calcul qui vérifie la signature, ledit dispositif comprenant les caractéristiques suivantes :

- un moyen pour calculer (12) la première grandeur auxiliaire (sp) en utilisant comme module le premier nombre premier (p) et en utilisant le message,
- un moyen pour calculer (14) la deuxième grandeur auxiliaire (sq) en utilisant comme module le deuxième nombre premier (q) et en utilisant le message,
- un moyen pour fusionner (16) la première grandeur auxiliaire (sp) et la deuxième grandeur auxiliaire (sq) en utilisant un algorithme de fusion pour obtenir un résultat du calcul par élévation à une puissance, le moyen pour fusionner la première grandeur auxiliaire (sp) et la deuxième grandeur auxiliaire (sq) contient en outre des moyens pour fournir un résultat du calcul par élévation à une puissance,

- un moyen pour vérifier (18) le résultat du calcul par élévation à une puissance à l'aide d'un algorithme de vérification (66a, 66b), différent de l'algorithme de fusion, en utilisant le premier nombre premier (p) et/ou le deuxième nombre premier (q), le moyen destiné à vérifier le résultat du calcul par élévation à une puissance contient en outre des moyens pour fournir un résultat escompté en utilisant ledit algorithme de vérification lorsque le moyen destiné à la fusion (16) a fourni un résultat correct,

- un moyen pour empêcher (12) que le résultat du calcul par élévation à une puissance ne sorte au cas où le moyen de vérification (18) montre que l'algorithme de vérification fournit un résultat différent du résultat escompté.

**Claims**

1. Computer-aided method for protecting an exponentiation calculation by means of the Chinese remainder theorem (CRT) using two prime numbers (p, q) forming auxiliary modules for calculating auxiliary quantities which may be joined to calculate a modular exponentiation for a module equal to the product of the auxiliary quantities, wherein the exponentiation calculation is performed within a cryptographic algorithm for an encryption of a message, a decryption of a message, a signature generation from a message or a signature verification calculation from a message, the method comprising:

   calculating (12) the first auxiliary quantity (sp) using the first prime number (p) as the module and using the message;

   calculating (14) the second auxiliary quantity (sq) using the second prime number (q) as the module and using the message;

   combining (16) the first auxiliary quantity (sp) and the second auxiliary quantity (sq) using a combination algorithm to obtain a result of the exponentiation calculation;

   following the combining step, verifying (18) the result of the exponentiation calculation by means of a verifying algorithm (66a, 66b), which differs from the combination algorithm, using the first prime number (p) and/or the second prime number (q), the verifying algorithm providing a predetermined result if the combining step (16) has been performed correctly; and

   if the verifying step (18) shows that the verifying algorithm provides a result other than the predetermined result,

   suppressing (22) an output of the result of the exponentiation calculation.

2. Method as claimed in claim 1, wherein in addition to the result (s) of the exponentiation calculation, the verifying algorithm uses as input data contents of a memory location at which the first auxiliary quantity (sp), the second auxiliary quantity (sq), the first prime number (p) or the second prime number (q) are stored.

3. Method as claimed in claim 1 or 2, wherein the exponentiation calculation is an RSA encryption, an RSA decryption, an RSA signature calculation or an RSA signature verification calculation.

4. Method as claimed in any one of the preceding claims, wherein the combination algorithm is the Garner algorithm.

5. Method as claimed in any one of the preceding claims, wherein the verifying algorithm includes a modular reduction of the result of the exponentiation calculation with the first prime number (p) and/or the second prime number (q) as the module.

6. Method as claimed in any one of the preceding claims, wherein the first auxiliary quantity is calculated as follows:

$$sp := m^{dp} \bmod p;$$

wherein the second auxiliary quantity is calculated as follows:

$$sq := m^{dq} \bmod q;$$

wherein the combination algorithm is defined as follows:

$$s = sq + \{[(sp-sq) \cdot qinv] \bmod p\} \cdot q;$$

and
wherein the verification algorithm is defined as follows:

$$s \bmod p = sp;$$

and/or

$$s \bmod q = sq;$$

and wherein the predetermined result is an equality condition in the verification algorithm.

7. Method as claimed in any one of claims 1 to 5, further comprising:

    after the step of combining the first auxiliary quantity and the second auxiliary quantity, verifying whether any input data for the exponentiation calculation have been changed, and, if this is so, suppressing the result of the exponentiation calculation.

8. Method as claimed in claim 7, wherein a random number (rand) is used for verifying auxiliary exponents (dp, dq).

9. Method as claimed in claim 7 or 8, wherein a prime number (t) is used as input data for verifying the first prime number (p) and the second prime number (q).

10. Method as claimed in claim 9, wherein the prime number (t) has a number of digits which is smaller than the number of digits of the first prime number (p) and of the second prime number (q).

11. Computer-aided apparatus for protecting an exponentiation calculation by means of the Chinese remainder theorem (CRT) using two prime numbers (p, q) forming auxiliary modules for a calculation of auxiliary quantities which may be joined to calculate a modular exponentiation for a module which is equal to the product of the auxiliary quantities, wherein the exponentiation calculation is performed within a cryptographic algorithm for an encryption of a message, a decryption of a message, a signature generation from a message or a signature verification calculation from a message, said apparatus comprising:

    means for calculating (12) the first auxiliary quantity (sp) using the first prime number (p) as the module and using the message;

    means for calculating (14) the second auxiliary quantity (sq) using the second prime number (q) as the module and using the message;

    means for combining (16) the first auxiliary quantity (sp) and the second auxiliary quantity (sq) using a combination algorithm to obtain a result of the exponentiation calculation, wherein said means for combining the first auxiliary quantity (sp) and the second auxiliary quantity (sq) further contains means for providing a result of the exponentiation calculation;

means for verifying (18) the result of the exponentiation calculation by means of a verifying algorithm (66a, 66b), which differs from the combination algorithm, using the first prime number (p) and/or the second prime number (q), wherein said means for verifying the result of the exponentiation calculation further contains means for providing a predetermined result using said verifying algorithm, if said means for combining (16) has provided a correct result; and

means for suppressing (22) an output of the result of the exponentiation calculation if the means for verifying (18) indicates that the verifying algorithm provides a result other than the predetermined result.

Bereitstellen zweier
Primzahlen p, q, deren
Produkt gleich dem
Modul n ist                    10

p                    q

Berechnen einer          Berechnen einer
1. Hilfsgröße            2. Hilfsgröße
Sp mittels CRT    12   14   Sq mittels CRT

sp                    sq

Zusammenfügen der
1. und 2. Hilfsgröße           16       20b
zu S

20a

s                18       24

Überprüfen der    o.k.   Ausgabe
Zusammenfügung           von S

nicht o.k.

ERROR

Unterdrücken der
Ausgabe von S                  22

# FIG 1

Eingabe: m, p, q, dp, dq, q $_{inv}$, t, rand

50

$p' = p \cdot t$
$dp' = dp + rand \cdot (p-1)$

52a

$q' = q \cdot t$
$dq' = dq + rand \cdot (q-1)$

52b

$Sp' = m^{dp'} \bmod p'$

54a

$Sq' = m^{dq'} \bmod q'$

54b

56a

$p' \bmod p = 0$ ?
$dp' \bmod (p-1) = dp$ ?

ERROR

56b

$q' \bmod q = 0$
$dq' \bmod (q-1) = dq$ ?

$Spt = Sp' \bmod t$
$dpt = dp' \bmod (t-1)$

58a

$Sqt = Sq' \bmod t$
$dqt = dq' \bmod (t-1)$

58b

$Spt^{dqt} = Sqt^{dpt} \bmod t$ ?

ERROR

60

$Sp = Sp' \bmod p$

62a

$Sq = Sq' \bmod q$

62b

64

$S = Sq + \{ [ (Sp - Sq) \cdot q_{nv} ] \bmod p \} \cdot q$

66a

$S \bmod p = Sp$

ERROR

$S \bmod q = Sq$

66b

Ausgabe:
$S = m^d \bmod (p \cdot q)$

68

FIG 2

| | EINGABE | AUSGABE |
|---|---|---|
| $n := p \cdot q$ <br><br> $dp := d \; mod \; (p-1)$ <br><br> $dq := d \; mod \; (q-1)$ <br><br> $q_{inv} := q^{-1} \; mod \; p$ | | $S = m^d \; mod \; n$ |

$Sp := m^{dp} \; mod \; p$

$Sq := m^{dq} \; mod \; q$

$S = Sq + \{ [ (Sp - Sq) \cdot q_{inv} \; ] \; mod \; p \} \cdot q$

FIG 3 (Stand der Technik)